# EUROPEAN PATENT APPLICATION

(11) **EP 0 867 615 A1**
(43) Date of publication of application: **30.09.1998**
(21) Application number: 97302173.6
(22) Date of filing: 27.03.1997
(51) Int. Cl.: F03D 3/04, F03D 3/06

(54) **Wind turbine with wind guiding funnel**

(71) Applicant: Schembri, Andrew Joseph, Werribee, Victoria 3030 (AU); Schembri, Joseph Paul, Werribee, Victoria 3030 (AU)
(72) Inventor: Schembri, Andrew Joseph, Werribee - Victoria 3030 (AU)
(74) Representative: Bayliss, Geoffrey Cyril

(57) **Abstract**

The disclosure relates to a funnel wind generator comprising at least one vertically located turbine (1) and having thereabout a plurality of outwardly extending wings (10) which direct the flow of wind to the turbine to cause efficient operation thereof. The wings are tangential to the periphery of the turbine and are equidistantly spaced around the periphery of the turbine to provide a series of adjacent funnels (14) through which wind can pass to the turbine. The wings can be supported by spaced discs (13) encircling the turbine.

## Description

This invention relates to a funnel wind generator or turbine and in particular to such a generator which can be of very substantial differences in scale for different applications.

One of the major problems that is facing mankind is the utilisation of energy.

Fossil fuels, petroleum and coal are a diminishing resource and there have been great inroads into the known deposits of these over the last hundred odd years.

Whilst there are still substantial resources their future is finite and limited.

Nuclear energy has not proved to be the boon which was initially hoped, basically because of the inherent dangers in relation to nuclear power generation.

Solar energy is, of course, a renewable resource and may well have substantial practical applications in the future but, to date, the conversion of solar energy into usable energy has been extremely expensive and not of great value where large quantities of power are concerned and, of course, there are some areas in the world where the sunlight impinging upon the earth's surface is not such as to provide reliable solar energy.

Wind energy is a further renewable resource and in some areas, at least, can provide a great deal of power and in most areas of the world can provide substantial power.

There have been proposed many different ways of converting wind energy into power, some of which have commercial applications but to date the methods of conversion have not been deemed to be satisfactory for many commercial applications.

It is to this form of energy that the present invention relates.

It is the object of the present invention to provide a wind generator or turbine which can be scaled to provide the required output, depending upon the prevailing wind conditions in any area and which is an efficient converter of the energy in the wind to an alternative form of energy.

The invention in its broadest sense comprises a funnel wind generator comprising at least one vertically located turbine and having thereabout a plurality of outwardly extending wings which direct the flow of wind to the turbine to cause efficient operation thereof.

In order that the invention may be more readily understood I shall describe one particular form of turbine made in accordance with the invention with reference to the accompanying drawings, in which:

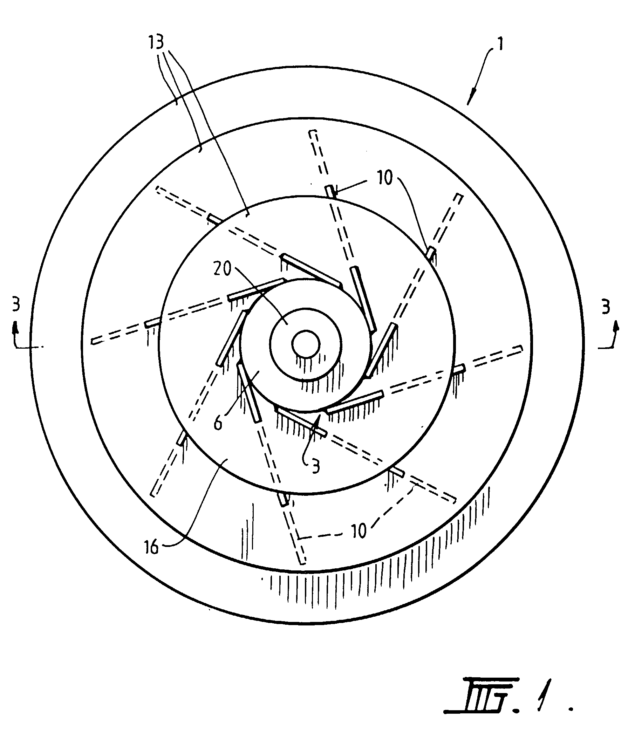

- Fig 1.: Shows a plan view of a funnel wind generator.

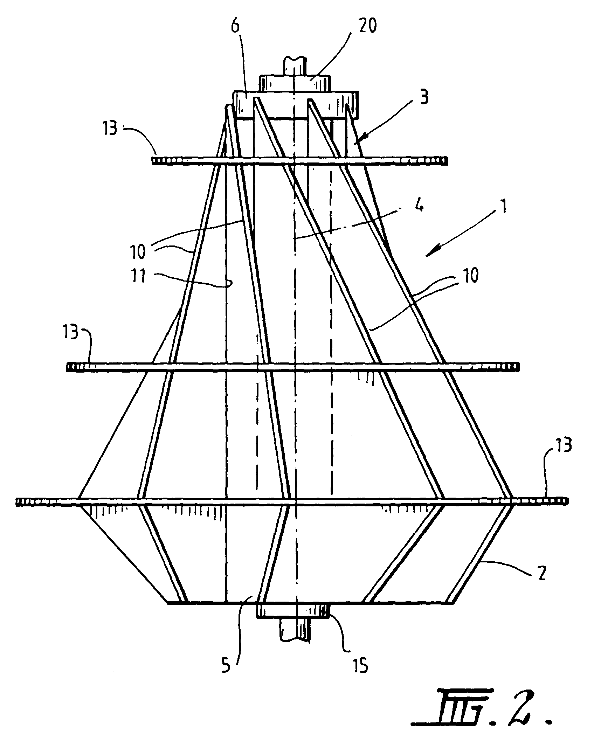

- Fig 2.: Shows a side elevation of a funnel wind generator

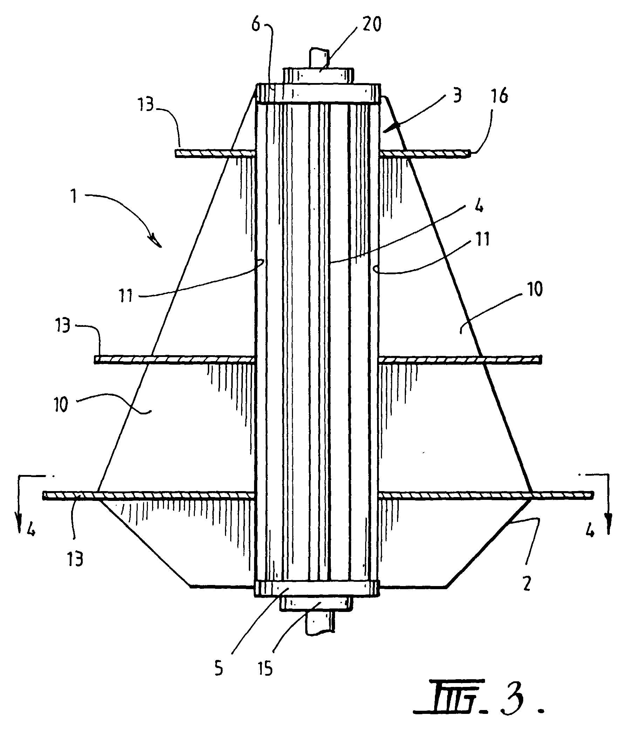

- Fig 3.: Is a sectional view along line 3-3 of Fig. 1

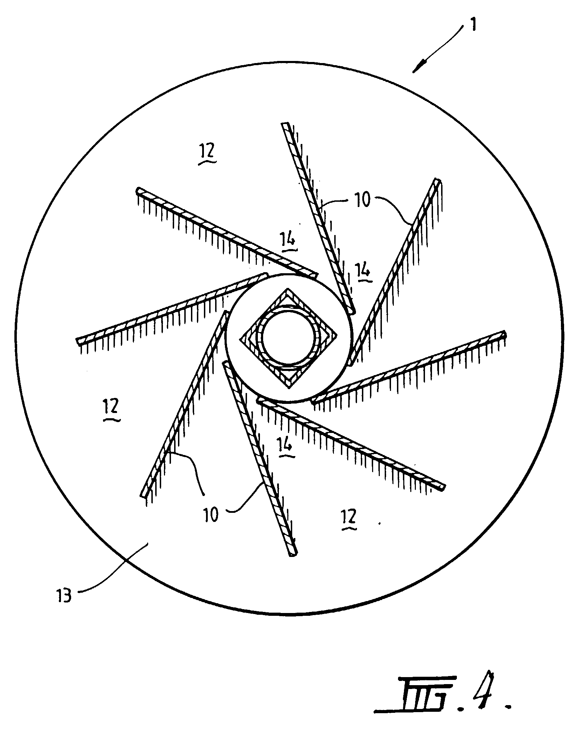

- Fig 4.: Is a sectional plan view along line 4-4 of Fig. 3

It is first to be understood that the turbine of the invention can be used to generate power of widely differing amounts depending upon the physical design of the turbine itself.

For example, the turbine could be designed to provide just a few kilowatts, for example for a country property to many megawatts where it is to be used to supply power to a town or city.

In this specification we shall not basically describe further the variations in output nor shall we describe the particular forms of construction, from a mechanical engineering point of view, except as incidental to the description.

In a preferred form of invention, the wings(10) are basically tangential to the periphery(2) of the turbine(1) and are equidistantly placed around the periphery(2) of the turbine(1) to provide a series of adjacent funnels(14) through which wind can be passed to the turbine(1).

It can be preferred that the upper portion of the turbine(3) as such is so as to provide an aerofoil like arrangement whereby the pressure at the surface of the upper portion(3) is reduced and the turbine(1) may be so formed so that air moving upwardly along the surface of the turbine(1) can provide further energy to effect rotation of the turbine(1).

The actual turbine(1) is designed to be located with its axis(4) vertical and the lower end of the turbine(5) may well be connected to a bearing arrangement(15) which is adapted to carry a substantial part of the weight of the turbine(1), as well as to constrain it for rotation about the axis(4) and the upper end(6) may have a lighter bearing arrangement(20) which is adapted purely to maintain the turbine(1) vertical and permit vertical rotation.

In a first form of the device, the turbine(1) may simply be a winged turbine of known type which is adapted to be rotated on the impingement thereof of wind. In more sophisticated forms the turbine(1) may be a form of spiral turbine which can be rotated both by winds impinging upon the turbine(1) substantially normal to the axis(4) thereof but also by wind movements along the axis(4) of the turbine(1) from the lower end(5) to the upper end(6) thereof.

Also, I can provide more than one turbine(1), with the turbines being mounted co-axially, one above the other and the forms of turbine used can vary depending on the input wind thereto.

This will be described here-in-after.

Directing the wind into the turbine(1) there are a number of wings(10) which extend outwardly from the turbine.

These wings(10), which may be generally triangular in form are located around the periphery(2) of the turbine(1), and spaced slightly outwardly there from and are preferably tangential to the turbine(1) at their inner end(11).

That is each wing(10) extends outwardly from the turbine(1) tangentially from its point of nearest approach and thus adjacent wings(10) will be located further apart the further outwardly they are relative to the turbine(1).

In one form of generator there may be eight such wings(10) around the periphery(2) but where a large generator is required there may be more than this number.

Practically we may prefer to effect rigidity of the structure by locating rims or discs(13) about the turbine(1), and in our preferred embodiment we provide three such discs(13), one spaced upwardly from the base of the wings(10), the second being substantially centrally of the wings(10) and the third being spaced downwardly(16) from the top of wings(10). These discs(13), as mentioned, provide rigidity to the structure and also have a secondary application which will be described later herein.

Alternatively, the discs(13) may be replaced by a spiral member placed around the wings(10) and extends from the lower end(5) of the turbine(1), to the upper end(6). It will be seed that each pair of wings(13), in plan view move outwardly from the periphery(2) of the turbine(1) and are further apart the further they are from the turbine(1), as previously discussed. That is that each pair of wings(13) define a funnel(14) which can act as a collector for wind at their outer edges(12) and which funnel the wind inwardly towards the turbine(1) thus effectively giving the wind a pre-pressurisation as it moves towards the turbine.

Thus, within reason, the wider the wings(10) the more wind will be gathered and fed towards the turbine(1).

The arrangement is such with the wings(10) being equally spaced around the turbine(1) that, regardless of the direction from which the wind is coming, the operation of the turbine(1) will be generally the same.

It is preferred that the upper end(6) of the turbine(1) is formed to cause a lifting of the wind which does not pass into the turbine(1) and this can effectively cause a lowering of pressure adjacent the upper end(6) of the turbine(1) and this lowering will tend to cause some, at least, of the air which impinges on the turbine(1) to be raised and to move along the surface of the turbine and, where a properly designed turbine(1) is provided, this will give additional rotational movement to the turbine(1) and increase the efficiency thereof.

If there is more than one turbine(1), then the turbines can be formed to make the maximum use of the wind at any specific position. For example, the lower or lowest turbine(1) could be arranged to effectively deflect "used" air upwardly and the turbine(1) thereabove could be formed, as previously discussed, to make use of this air to provide a driving force as well as from the air passing directly therethrough. In this way, maximum benefit can be made of the ambient wind.

Generally the wind, as it passes through the turbine(1) can pass through the wings(10) on the side away from the direction of movement and simply rejoin the wind flow although generally at a lesser velocity.

The shape of the unit can also assist in this as the wind which is not gathered between the wings(10) can cause an affectively low pressure area on the side of the turbine away from the direction of the wind and this low pressure area will be of attraction to wind which passes through the turbine(1) and will help clear this from the turbine(1) as quickly as possible.

It is also possible to make use of solar energy in respect to the turbine(1). The wings(10) and discs(13) on the generally north facing portion of the turbine can be painted an absorbing colour, such as black and that on the other side can be painted a reflecting colour, such as white or silver so that when the sun strikes the northern side, which it will normally do selectively, except around the summer solstice, then this side tends to be warm while the sun which strikes the other side will tend to reflect from this which will thus remain cooler so there can be a further wind movement across the turbine as a result of this differential temperature, again providing further energy into the turbine(1).

In this specification I have used the word turbine and generator as the turbine must provide its power to some source whereby the power generator can be utilised.

If the unit is to be used where there is already electricity reticulation then it could drive an AC generator, or alternator and produce directly alternating current which can be provided to the grid. If it is to be used alone then it may well be preferred to use, say, a DC generator and to supply the power to a battery stack whereby it can be stored until ready to be used and could be used either as DC power of could be passed through a mechanical or electronic alternator to provide AC power on demand.

Also the turbine(1) could be used to run compressors which can compress air for later use, water pumps, which can provide movement of water to provide additional energy by moving the water against a head and later using it, say through a hydro electric generator or otherwise.

It is possible to increase the output from the device by placing solar cells on the discs(13) and possibly also on the sides of the wings (10) which are effectively north facing to present a large part of their surface to the normal rays of the sun. That is on the sides of possibly two or four of the wings which are north facing.

The solar power generated in this way can be used to supplement the power generated by the turbine or could be used independently there from, say to provide power to generally control the operation of the turbine.

If the discs(13) are replaced by a spiral reinforcement, this can permit access, either to individuals or vehicles, depending on the tip of the generator for maintenance purposes.

In the early part of this specification I mentioned that the device of the invention can provide power from a relatively small quantity to a very substantial quantity.

Indeed it is believed that the device of the invention could be applied to a self sufficient city which could be located within the wings and discs of the described arrangement, the city all drawing it's power from the turbine. While such an arrangement may sound somewhat futuristic it is nevertheless an effective way of providing power without having to provide substantial reticulation of power as is the case with most coal fired and most hydro and nuclear stations.

In this specification I have described one particular, and preferred embodiment of my invention but it will be seen from the specification itself that many modification can be made without departing from the spirit and scope thereof.

## Claims

1. A funnel wind generator comprising at least one vertically located turbine and having thereabout a plurality of outwardly extending wings which direct the flow of wind to the turbine to cause efficient operation thereof.

2. A funnel wind generator as claimed in claim 1 wherein the vertical axis and the lower end of turbine may be connected to a bearing arrangement which is adapted to carry a substantial part of the weight of the turbine and to constrain it for rotation about the axis.

3. A funnel wind generator as claimed in claim 2 wherein the upper end of the turbine is formed and may have a lighter bearing assembly which is adapted purely to maintain the turbine vertical and increase the vertical rotation thereof.

4. A funnel wind generator as claimed in any preceding claim in which the turbine consists of wings triangular in form equidistantly placed around the periphery of the turbine, said wings extending outwardly from the turbine and tangentially from its point of nearest approach.

5. A funnel wind generator as claimed in claim 4 in which rims or discs are located about the periphery of the turbine to effect rigidity of the structure.

6. A funnel wind generator as claimed in claim 5 in which the rims or discs are equidistantly spaced.

7. A funnel wind generator as claimed in claims 5 & 6 whereby there are three equidistantly spaced discs or rims, one spaced upwardly from the base of the wings, the second being substantially central of the wings and the third being spaced downwardly from the top of the wings.

8. A funnel wind generator as claimed in claim 1-4 in which a spiral member is located around the wings and extends from the lower end of the turbine to the upper end of the turbine.

9. A funnel wind generator as claimed in any preceding claim in which each pair of wings define a funnel which can act as a collector for wind at their outer edges and such pair of wings funnel the wind towards the turbine thus effectively giving the wind a pre-pressurisation as it moves towards the turbine.

10. A funnel wind generator as claimed in claim 9 in which the wings and discs on the generally north facing portion of the device are painted an absorbing colour preferably black and the other side is painted a reflecting colour preferably white.

11. A funnel wind generator as claimed in any preceding claim in which the device may be used provided there is already electricity reticulation, to drive an AC generator or alternator and produce directly alternating current which can be provided to a grid.

12. A funnel wind generator as claimed in claim 11 wherein the device may be used in isolation and the power generated may be supplied to a battery stack whereby it can be stored and used ultimately as DC power or alternatively passed through a mechanical or electronic alternator to provide AC power on demand.

13. A funnel wind generator as claimed in any preceding claim wherein solar cells are placed on the discs or spiral member and the sides of the wings which are preferably north facing.

14. A funnel wind generator as claimed in claim 13 wherein the turbines may be mounted co-axially, one above the other said turbines being formed at their upper ends to maximise use of wind at any specific position.
